# EUROPÄISCHE PATENTSCHRIFT

(11) **EP 1 343 126 B1**
(45) Veröffentlichungstag und Bekanntmachung des Hinweises auf die Patenterteilung: **10.08.2005**
(21) Anmeldenummer: 02004923.5
(22) Anmeldetag: 05.03.2002
(51) Int. Cl.: G07F 19/00

(54) **Verfahren zum Betreiben von Automaten bei der bargeldlosen Abwicklung von Automaten-Nutzungsvorgängen**
Method for operating automatic machines with a cashless payment procedure of the operation of automatic machines
Méthode pour opérer des machines automatiques pour paiement sans espèces pour l'opération de ces machines

(43) Veröffentlichungstag der Anmeldung: 10.09.2003
(73) Patentinhaber: SCHEIDT & BACHMANN GMBH, D-41238 Mönchengladbach (DE)
(72) Erfinder: Miller, Norbert, 41063 Mönchenladbach (DE); Feiter, Manfred, 41238 Mönchengladbach (DE)
(74) Vertreter: Stenger, Watzke & Ring Patentanwälte

(56) Entgegenhaltungen:
- EP-A- 1 073 023
- WO-A-00/38443
- WO-A-01/03078
- WO-A-01/41408
- WO-A-01/45058
- DE-A- 10 005 487

## Beschreibung

Die vorliegende Erfindung betrifft ein Verfahren zum Betreiben von Automaten bei der bargeldlosen Abwicklung von Automaten-Nutzungsvorgängen unter Verwendung eines Mobilfunkendgerätes zur Kommunikation mit einer Zentralstelle.

Automaten für unterschiedlichste Nutzungsvorgänge sind umfangreich im Einsatz. Zum einen sind dies Automaten zur direkten Steuerung einer Warenausgabe, beispielsweise Nahrungs- und Genußmittel, Automaten zur Ausgabe von Snacks, Süßigkeiten, Zigaretten, Getränken und dergleichen, Automaten für die Ausgabe von Fahrausweisen, aber auch Automaten zur Ausgabe von Treibstoff an Tankstellen und dergleichen. Weiterhin sind Automaten für die Einräumung von Berechtigungen bekannt, beispielsweise zur Nutzung von Parkraum in Parkhäusern, Zugangsberechtigungen beispielsweise in Freizeitanlagen, Schwimmbädern und dergleichen oder Automaten für die Nutzungsberechtigung von Speicherraum, beispielsweise Schließfächer und dergleichen. Im Sinne der vorliegenden Erfindung wird die Bezeichnung "Automat" ganz allgemein auch für automatisierte Zahlungsvorgänge, also Zahlstellen und dergleichen verwendet. So können unter diesem Begriff auch Verkaufsstellen zusammengefaßt werden, bei welchen im Zusammenhang mit einer manuellen Warenentnahme im wesentlichen ein automatisierter erfindungsgemäßer Zahlungsvorgang stattfindet, sogenannte point of sale.

Der übliche Fall der Automatenbenutzung sieht den Einsatz von Bargeld vor, indem die gewünschte durch den Automaten zu realisierende Leistung unmittelbar durch das Eingeben des erforderlichen Betrages in den Automaten freigegeben wird. Für mögliche Umstellungen von Automaten auf einen bargeldlosen Nutzungsverkehr gibt es die unterschiedlichsten Ansätze. So sind Automaten auf die Nutzung von Kreditkarten umgestellt, wozu allerdings typischerweise ein online-Betrieb der Automaten erforderlich ist. Auch nutzen Automaten betreiberseitige bargeldlose Zahlungssysteme, beispielsweise durch die Ausgabe von vorausbezahlten oder kreditierten Karten nach vorhergehender Identifikation des Nutzers gegenüber dem Betreiber.

Bei allen bargeldlosen Systemen ergibt sich das Problem der Eröffnung der Möglichkeit eines gesicherten Inkassovorganges und die direkte Zuordnung zu einem Automatennutzungsvorgang. Ein Nachteil der auf kreditkartenbezogenen Inkassovorgängen basierenden Lösungssysteme ist die Notwendigkeit des online-Betriebs der Automaten, wodurch eine aufwendige Rechner- und Installationstechnologie erforderlich ist. Darüber hinaus umfassen derartige Systeme Sicherheitsrisiken, da die Nutzerdaten auch zu Zwecken des Mißbrauchs abgezweigt werden können. Die übrigen Systeme setzen eine umfassende und Inkassovorgänge absichernde Vorabwicklung zwischen Betreiber und Nutzer voraus, wodurch die Variabilität der entsprechenden Automatennutzung auf durch den Betreiber vorgegebene Nutzungsbereiche eingeschränkt wird. Die Nutzer müssen daher für unterschiedliche Nutzungsbereiche unterschiedliche Karten, Kennungen und dergleichen vorhalten.

Es sind keine Verfahren bekannt, die einen die Variabilität in bezug auf Nutzungsberechtigungen nicht einschränkende und die Automatennutzung vom Betreibersystem abkoppelnden Verfahren bekannt, die mit geringem administrativen Aufwand und ohne große vorausschauende Planung durch den Nutzer bei Einhaltung von erforderlichen Sicherheiten einsetzbar sind. Insbesondere sind jedoch keine derartigen Verfahren bekannt, welche es ermöglichen, vorgabenabhängig Tarifwechsel zu berücksichtigen.

Ein derartiger Bedarf ergibt sich beispielsweise bei dem Zusammenschluß oder Kooperationen von Leistungsanbietem oder der Kombination von Waren und/oder Leistungen. So ist es beispielsweise bekannt, daß Kooperationen unterschiedlicher Leistungsanbieter, deren Kundenstämme sich überschneiden, zum Zweck der Kundenbindung häufig zum Mittel der Rabattierung von Produkten oder Leistungen greifen. Die Produkte oder Leistungen befinden sich in einem zeitlichen, räumlichen oder gewissermaßen logischen Kontext aufgrund eines inneren Zusammenhanges, und werden bei unterschiedlichen Anbietern des gleichen Anbieterverbundes erworben. Beispiele sind Park+Ride in Verbindung mit Bahnfahrten, in Verbindung mit dem Parken in Einzugsgebieten einer Gruppe von Einzelhandelsgeschäften, Loyalty-Anwendungen und dergleichen. Auch typisch sind Rabattierungsverbände im Einzelhandel.

Bekannte Systeme wie Meilenprogramme oder Paybackprogramme sammeln zunächst sämtliche Verkaufsdaten zentral und errechnen unter Anwendung von Algorithmen im Nachhinein sogenannte Bonifizierungen. Sofern solche Systeme durch Automaten abgewickelt werden, gilt dies nur für kombinierte Automaten des gleichen Systems von Berechtigungsausweisen. Hierbei ist jedoch ausgeschlossen, unterschiedliche Berechtigungsausweissysteme an unterschiedlichen Automaten zu verwenden, und dennoch Bonifizierungen, Rabattierungen oder Sondertarifauswahlen zu ermöglichen. Ist beispielsweise ein Magnetticketsystem für bestimmte Automaten eingesetzt, brauchen andere Automaten, die Papierticketsysteme verwenden, grundsätzlich auch Magnetleser. Solche Systeme erhöhen also den Aufwand und sind darüber hinaus nicht gegen Betrug gesichert, denn es können auch gefundene oder gestohlene Tickets eingesetzt werden. Darüber hinaus werden die Nutzungsvorgänge erheblich verkompliziert. Es sind keine Verfahren und Systeme bekannt, die eine automatisierte und damit einfache und sichere Nachweisberechtigung zum Rabatterhalt oder zur Nutzung eines Sondertarifes oder dergleichen zum Zeitpunkt der Zahlung realisierbar machen.

Die EP 1 073 023 A zeigt ein Verfahren zur Abgabe einer Ware oder zum Erbringen einer Dienstleistung unter Einsatz eines Mobilfunk-Endgeräts mit folgenden Schritten: Herstellen einer ersien Kommunikationsverbindung zwischen einem Verkaufsautomaten und dem Mobilfunk-Endgerät; Herstellen einer zweiten Kommunikationsverbindung zwischen dem Mobilfunk-Endgerät und einem Diensterechner; Auswahl einer gewünschien Ware an dem Verkaufsautomaten und Abgabe der ausgewählten Ware; Abrechnen des Kaufbetrags über die selbigen Kommunikationsverbindungen.

Die mit der vorliegenden Erfindung zu lösende Aufgabe kann darin gesehen werden, daß eine Möglichkeit der direkten, kundengeräteunabhängigen Übermittlung von Daten aus dem Verkaufsautomaten an die Zentralstelle bereitgestellt wird.

Zur technischen **Lösung** dieser Aufgabe wird mit der Erfindung ein Verfahren gemäß Anspruch 1 vorgeschlagen.

Erfindungsgemäß können beliebige Automaten ohne direkte Kommunikationsverbindung zu einer Zentralstelle, einer Abgleichstelle oder dergleichen für beliebige Zwecke wie Produktausgabe, Ausgabe von Berechtigungsausweisen, Nutzungsberechtigungen und dergleichen eingesetzt werden. Ein solcher offline-Automat, der selbstverständlich für die herkömmlichen Zahlungsweisen wie Bargeld, Kreditkarte und dergleichen eingerichtet sein kann, weist bei Auswahl der erfindungsgemäßen Abwicklungsform eine Telefonnummer aus. Mittels eines Mobilfunkendgerätes wählt der Nutzer diese Telefonnummer an. In einer Zentralstelle, einem sogenannten offline-payment-Server wird die eingehende Mobilfunknummer empfangen. Unter Umständen setzt dies eine entsprechende Freigabe der Anzeige der Absendernummer durch den Nutzer in seinem Mobilfunkgerät voraus, wobei es sich jedoch um einen von der vorliegenden Erfindung unabhängigen bekannten Stand der Technik handelt. Es ist anzumerken, daß es nicht zu einer kostenpflichtigen Kommunikationsverbindung zwischen dem Nutzer und der Zentralstelle kommen muß, denn es genügt, wenn die Zentralstelle den Anrufer anhand der eingehenden Nummer identifizieren kann. Da der Nutzer die Nummer vom Automaten entnommen hat, ist zentralstellenseitig bereits eine direkte Zuordnung von beabsichtigter Nutzung einerseits und der möglichen Nutzungsart des Automaten andererseits ohne weiteres möglich. Entweder erfolgt dies dadurch, daß eine Zentralstelle ohnehin nur für ganz bestimmte Automaten - und damit Nutzungstypen - eingerichtet ist, oder durch eine in der Zentralstelle hinterlegte Datenbank in bezug auf die möglichen Anwahlnummern. Nach der Anwahl des offline-payment-Servers ist dort also die Information vorhanden, daß der registrierte Nutzer des Mobilfunkendgerätes eine bestimmte vorgegebene Nutzungsberechtigung eines durch die Anwahlnummer identifizierten Automaten erlangen möchte. Zentralstellenseitig wird nunmehr ein Abwicklungscode zusammengestellt und beispielsweise in Form eines sms an das Mobilfunkendgerät des Nutzers übermittelt. Alternativ zu einer SMS können beispielsweise Sprachansagen, WAP-Übertragungen oder dergleichen verwendet werden. Weitere Alternativen können in der Verwendung von Infrarotschnittstellen, sogenannten IRDA oder Nahfunksystemen, beispielsweise Bluetooth bestehen. Diese kann sowohl die Anwahl der Zentrale als auch die Rückübertragung des Nutzungscodes betreffen. Der Abwicklungscode ist auf die beabsichtigte Nutzungsart und den zu benutzenden Automaten abgestimmt. Der den Abwicklungscode empfangende Nutzer gibt diesen Abwicklungscode nunmehr in den Automaten ein. Der dortige Rechner ist nun in der Lage, anhand des Abwicklungscodes nutzungsbezogene Informationen zu ermitteln und den Automaten für eine bestimmte Nutzungsart freizugeben. Der Nutzer kann nun die gewünschte Nutzungsberechtigung einlösen, d. h. Produkte entnehmen, eine Abbuchung bestätigen, eine Berechtigung realisieren oder dergleichen.

Insbesondere kann im Rahmen der Erfindung vorgesehen sein, daß automatenseitig aus im übermittelten Nutzungscode enthaltenen Informationen bzw. Parametern und einem geheimen Schlüssel ein Freigabecode nachberechnet bzw. überhaupt erst errechnet wird. Ein solcher übermittelter Parameter kann vorzugsweise die Zeit sein, die gegebenenfalls gekoppelt mit anderen Parametern über den geheimen Schlüssel zum Freigabecode oder zu Teilen desselben umgerechnet wird.

Im Automaten werden nun Informationen gespeichert, die den eingegebenen Code einerseits und die durchgeführte Nutzung andererseits umfassen. In der Zentralstelle ist dem Abwicklungscode die Mobilfunknummer des Betreibers zugeordnet. Es ist nunmehr möglich, im einfachen offline-Transaktionsbetrieb einen Inkassovorgang in bezug auf die durchgeführte Nutzung durchzuführen. Hierzu stehen die an sich bekannten Verfahren bereit, beispielsweise die Abwicklung über die Telefonrechnung, wobei der Telefonbetreiber die Zentralstelle ist, die die Zuordnung der Mobilfunknummer zu personenbezogenen Inkassoinformationen vorhält, oder es können hierfür separate Voreinstellungen entweder im offline-payment-Server selbst oder in von diesem genutzten übergeordneten Zentralen erfolgen.

Offline-payment-Server können für eine bestimmte Automatengruppe oder als übergeordnetes System ausgelegt sein, und der Bezug zu Inkassoinformationen der Nutzerperson kann direkt oder indirekt hergestellt sein. Will beispielsweise der Nutzer bestimmte Automatentypen nutzen, kann es sinnvoll und erforderlich sein, wenn er sich vorher bei der Betreiberzentrale so identifiziert, daß diese seine Mobilfunknummer direkt Inkassoinformationen, beispielsweise Kontonummer, Kreditkartennummem oder dergleichen einrichten kann. Auch können prepaid-Systeme genutzt werden, indem eine Zentralstelle ein Guthaben eines Nutzers, zugeordnet zu seiner Mobilfunknummer verwaltet. Andererseits können auch übergeordnete Zentralen die personenbezogenen Inkassoinformationen und die Mobilfunknummer des Nutzers verwalten und einer Vielzahl von offline-payment-Servern bei Bedarf bereitstellen.

Die Übermittlung der im Automaten gespeicherten Informationen kann im offline-Betrieb, beispielsweise durch Datenträgeraustausch oder dergleichen erfolgen, oder auch im online-Betrieb durch Auslesen des Automatenspeichers und Übermitteln der Informationen an die gewünschte Zentralstelle. In keinem Fall ist es erforderlich, daß der Automat zeitlich unbegrenzt und zum direkten Zweck der Nutzung in irgendeiner Form zu Zwecken der Datenkommunikation vernetzt sein muß.

Bei aufeinanderfolgenden Nutzungsvorgängen ist es nunmehr unproblematisch möglich, daß zentralstellenseitig unter Auswertung von Vorgaben Tarifentscheidungen getroffen bzw. Tarifsysteme ausgewählt werden. Dazu gibt es unterschiedliche Möglichkeiten im Rahmen der Erfindung. Werden unter Verwendung der gleichen Identifikation, gemäß einem Vorschlag der Erfindung beispielsweise der gleichen Mobilfunknummer, aufeinanderfolgend Nutzungsberechtigungen bzw. Nutzungscodes abgerufen, so ist die Zentrale bereits in der Lage, zeitliche, räumliche oder logische Zusammenhänge zu erkennen. Beispielsweise ist die Berechtigung zum Erhalt eines Rabattes im wesentlichen aus der logischen Verknüpfung von Zahlungsvorgängen herleitbar, die für den Erwerb unterschiedlicher Produkte oder Leistungen durchgeführt werden. Nutzt also beispielsweise ein Nutzer einen Automaten zur Erlangung eines Park+Ride-Tickets und darauf folgend unter Verwendung der gleichen Mobilfunkkennung oder einer sonstigen gleichen Identifikation einen Automaten zum Kauf eines Nahverkehrstickets, sind diese Automaten zwar meist unterschiedlich und werden auch von unterschiedlichen Betreibern betrieben, können jedoch in der Zentrale als zeitlich, räumlich und/oder inhaltlich zusammengehörig identifiziert werden. Die Zahlung beider Leistungen, sowohl der zu rabattierenden als auch der den Rabatt begründenden, erfolgt auf dem beschriebenen Weg. Die Zentrale kann nun abprüfen, ob die aufeinanderfolgenden mitgeteilten Nutzungsabsichten zeitlich, örtlich oder logisch miteinander verknüpft sind und gemäß gespeicherter Informationen einen Rabatt auslösen können. So ist es denkbar, auch Kombinationen der Verknüpfungen heranzuziehen.

Es ist nun möglich, daß bereits der Nutzungscode für die nachfolgende Nutzungshandlung eine Rabattinformation enthält. Auch ist es möglich, normale Nutzungscodes zu vergeben, jedoch beim Inkasso-Abgleich die Rabattierungsberechtigung zu ermitteln und anzuwenden. Es gibt somit im Rahmen der Erfindung zwei Anwendungsmöglichkeiten.

Die Anwendung des erfindungsgemäßen Verfahrens kann von der zusätzlichen Verwendung einer persönlichen Identifikationsnummer abhängig gemacht werden. Mögliche Bedingungen hierfür sind vielfältig. So kann beispielsweise ein bestimmter Automatentyp und damit ein bestimmter Produkt- oder Nutzungstyp wegen des besonders hohen Wertes die zusätzliche Verwendung der Identifikationsnummer rechtfertigen. Weitere mögliche Bedingungen sind beispielsweise die zur Nutzung erforderlichen Beträge, Überschreitungen von Tageslimits, personenbezogene Vorgänge, wie beispielsweise erschwerte Inkassoabwicklungen, Tageszeiten, Diebstahlprofile, d. h. im wesentlichen statistisch ermittelte Diebstahlhäufigkeiten, Zufallsgeneratoren und schließlich auch die persönliche Entscheidung des Nutzers. Da der Automat und die Zentralstelle nicht in einer direkten Kommunikationsverbindung stehen, kann die Notwendigkeit der zusätzlichen Eingabe einer persönlichen Identifikationsnummer in dem Abwicklungscode als verschlüsselte Information hinterlegt sein, d. h., der automatenseitige Rechner kann durch Analyse des Abwicklungscodes erkennen, daß die zusätzliche Eingabe der persönlichen Identifikationsnummer erforderlich ist.

Der Abwicklungscode kann eine Vielzahl von Informationen umfassen.

Das erfindungsgemäße Verfahren ermöglicht die Abkopplung der Automatennutzung von der Betreiberorganisation einerseits und dem Inkassovorgang andererseits. Der jeweils zu nutzende Automat ist eine standalone-Version. Es ergibt sich eine indirekte Verbindung zum offline-payment-Server durch die auf dem Automat lesbar identifizierte Telefonnummer. Die Kommunikation zwischen dem Nutzer und dem offline-payment-Server erfolgt unter Nutzung eines Mobilfunkendgerätes, wobei die Kosten auf die Übersendung einer SMS von der Zentralstelle an den Nutzer reduziert werden können. Der vor Ort im Bereich des Automaten befindliche Nutzer kommuniziert seinerseits mit dem Automaten über eine direkte Eingabeschnittstelle, beispielsweise blue tooth oder Tastaturfeld. Eine indirekte Kopplung zwischen payment-Serversystem und Automat ergibt sich durch eine Synchronisation der Rechnersoftware, d. h. der automatenseitige Rechner ist in der Lage, die vom zentralseitigen Rechner zusammengestellte Abwicklungscodierung zu entschlüsseln und den Automaten damit für die gewünschte Berechtigung freizuschalten. Die Variabilität des Einsatzes vergrößert zugleich auch die Einsatzmöglichkeiten für Automaten. Das Verfahren ist anwendbar auf Warenausgabeautomaten, beispielsweise Tankstellensäulen, Zigarettenautomaten, Fahrausweisautomaten, Warenausgabeautomaten und dergleichen, kann jedoch bis hin zu Zahlungsabwicklungen in herkömmlichen Verkaufsstellen erweitert werden. So kann sich beispielsweise ein Käufer bei Betreten eines Supermarktes, Warenhauses oder dergleichen nach dem erfindungsgemäßen Verfahren einen Betrag freischalten lassen und an der Kasse nur noch durch Eingabe des empfangenen Abwicklungscodes den Bezahlungsvorgang abwickeln. Auch können Verkaufsörtlichkeiten direkt auf das Verfahren ausgerichtet werden.

Die Sicherheitsrisiken sind bei dem erfindungsgemäßen Verfahren auf eine Minimum reduziert. Im Normalfall kann davon ausgegangen werden, daß bereits die Nutzung des Mobilfunkgerätes durch die erforderliche Eingabe ein PIN ausreichend gesichert ist. Ein Mißbrauch des Verfahrens kommt also nur in Betracht, wenn ein Mobilfunkgerät in eingeschaltetem und freigegebenem Zustand durch einen unberechtigten Nutzer genutzt wird. Durch die Einrichtung von Tageslimits, die zusätzliche Anforderung der Eingabe von persönlichen Identifikatiosnummern, die Analyse statistisch ermittelter Diebstahlprofile und dergleichen kann jedoch dieses Risiko ebenfalls auf ein Minimum reduziert werden.

Insbesondere eignet sich das System zur automatisierten, variablen Anwendung unterschiedlicher Tarife aufgrund von programmierten oder gespeicherten Vorgaben.

Weitere Vorteile und Merkmale der Erfindung ergeben sich aus der folgenden Beschreibung anhand der Figur. Dabei zeigt:

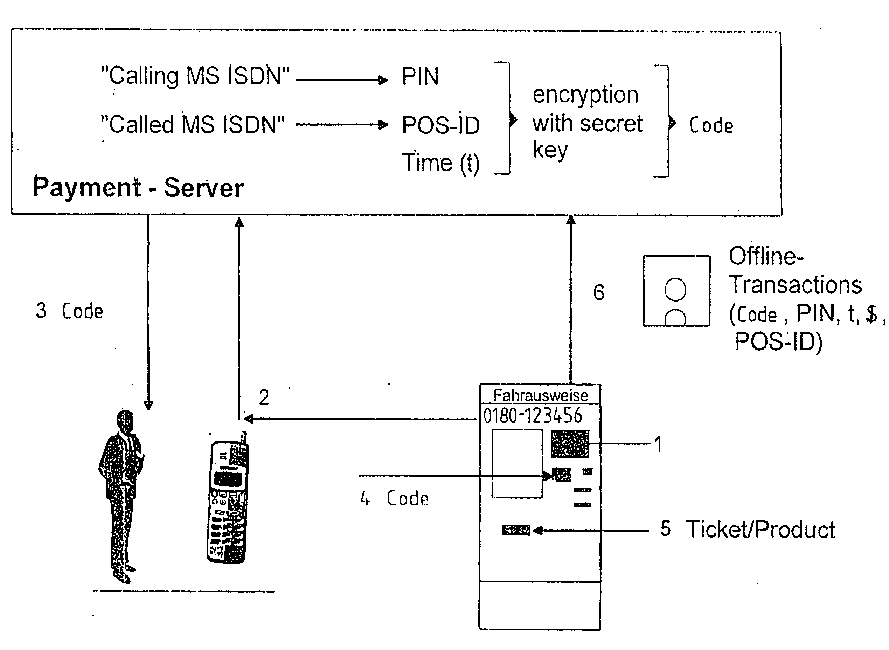

- Fig. 1: eine schematisierte Darstellung eines Ablaufdiagramms für die Nutzung eines Fahrausweisautomaten.

In der Figur ist ein Fahrausweisautomat gezeigt, welcher gut lesbar eine Telefonnummer identifiziert. Auf einem Auswahlfeld 1, beispielsweise einem Touchscreen, wählt der Nutzer die Zahlform aus. Entscheidet er sich für die erfindungsgemäße Zahlungsform, stellt sich der Automat für eine gewisse Zeit auf die Eingabe eines Abwicklungscodes ein. Der Nutzer wählt mittels des Mobilfunkgerätes, dargestellt durch ein Handy, die auf dem Automaten angegebene Telefonnummer und übermittelt über ein Mobilfunknetz (GSM) seine Telefonnummer an einen offline-payment-Server. Der offline-payment-Server ermittelt für den beabsichtigten Nutzungsvorgang, der ihm durch die angewählte Telefonnummer bekannt ist, den Abwicklungscode und übermittelt diesen beispielsweise mittels sms, Sprachansage, WAP oder dergleichen an das Mobilfunkgerät des Nutzers, gekennzeichnet durch das Bezugszeichen 3. Der Nutzer überträgt den empfangenen Abwicklungscode in das am Automaten bereitgehaltene Tastaturfeld, welches auch ein Touch Screen sein kann, gekennzeichnet durch Bezugszeichen 4. Optional kann die zusätzliche Eingabe einer personenbezogenen Identifikationsnummer erforderlich sein. Der Automat wird nun für die gewünschte Benutzung freigegeben, d. h. der Nutzer kann im Falle des gezeigten Ausführungsbeispiels nunmehr einen Fahrausweis entnehmen, bezeichnet durch Bezugszeichen 5. Hier kann er entweder einen freigegebenen Betrag verbrauchen oder in Abhängigkeit vom Abwicklungscode den Vorgang je nach Erfordernis abschließen. Nach der Ausgabe ist der Nutzungsvorgang für den Nutzer beendet. Im Automaten sind der Abwicklungscode oder daraus ermittelte Informationen sowie die den direkten Nutzungsvorgang betreffenden Informationen gespeichert. Aus dem Abwicklungscode kann der Automat zunächst vor der Freigabe die Zulässigkeit des Codes ermitteln, indem er beispielsweise die POS-ID entschlüsselt, optional die zusätzliche Prüfung der persönlichen Identifikationsnummer durchführt, ein Zeitsignal entschlüsselt und/oder setzt und dergleichen.

Mit 6 ist dann die Vorbereitung zur Abwicklung eines Inkassovorgangs gekennzeichnet, dargestellt durch eine Diskette. Die Art des Auslesens der Informationen aus dem Speicher des Automaten und die Übermittlung an die jeweilige Zentralstelle zur Abwicklung des Inkassovorgangs sind dabei variabel und können im offline-Betrieb oder im online-Betrieb erfolgen, wobei der online-Betrieb nur kurzzeitig und zweckgebunden hergestellt werden muß.

Bei diesem Ausführungsbeispiel ist auch ein Beispiel für die zentralseitige Zusammenstellung eines Abwicklungscodes gezeigt. Aus der angewählten Telefonnummer, bezeichnet mit "called MS ISDN" ermittelt die Zentrale die POS-ID und den Zeitpunkt. Aus der Analyse der anrufenden Mobilfunknummer, bezeichnet mit "calling MS ISDN" ermittelt die Zentrale die persönlichen Identifikationsdaten des Nutzers. Über diese persönlichen Identifikationsdaten kann die Zentrale aus einer Datenbank die erforderlichen Informationen wie Betragslimits, Erfordernis der zusätzlichen Eingabe einer persönlichen Identifikationsnummer, Sperrhinweise und dergleichen ermitteln. Aus der POS-ID kann die Zentrale weiterhin Verfallslimits und dergleichen festlegen. Aus den zusammengetragenen Informationen wird eine Abwicklungscodierung zusammengestellt und verschlüsselt, bezeichnet mit "encryption with secret key". Hierbei können je Zahlstelle (POS-ID) individuelle, also verschiedene, geheime Schlüssel zum Einsatz kommen. Die daraus sich ergebende Abwicklungscodierung wird im Schritt 3 beispielsweise per sms an den Nutzer übertragen. Nach in der oben beschriebenen Weise abgewickelter Nutzung hält der Rechner des Automaten die Transaktionsinformationen bereit, beispielsweise den Abwicklungscode, optional die persönliche Identifikationsnummer, Zeitpunkt, Betrag und die POS-ID. Weitere oder alternative Informationen wie beispielsweise Wareninformationen für statistische Auswertungen und dergleichen können aufgenommen sein.

Insbesondere kann entweder bei der zentralseitigen Zusammenstellung eines Abwicklungscodes aufgrund der zeitlichen, örtlichen und/oder logischen Parameter und etwaiger programmierter oder gespeicherter Vorgaben die Auswahl eine Sondertarifsystemes, beispielsweise eines Rabattes, erfolgen. Alternativ oder zusätzlich kann auch bei der Abwicklung des Inkasso-Vorganges, d. h., wenn die Daten vom Automaten die Zentralrechner erreichen, eine Tarifauswahl in entsprechender Weise erfolgen.

Das beschriebene Ausführungsbeispiel dient nur der Erläuterung und ist nicht beschränkend.

### Bezugszeichenliste

- 1: Zahlungsformauswahl
- 2: Anruf an Zentrale
- 3: Übermittlung des Abwicklungscodes
- 4: Eingabe des Abwicklungscodes
- 5: Nutzung
- 6: Informationstransaktion für Inkasso

## Patentansprüche

1. Verfahren zum Betreiben von Automaten bei der bargeldlosen Abwicklung von Automaten-Nutzungsvorgängen unter Verwendung eines Mobilfunkendgerätes zur Kommunikation mit einer Zentralstelle, wobei eine im Bereich des Automaten angegebene Telefonnummer einer Zentralstelle angewählt, ein automaten- und/oder vorgangsbezogener Abwicklungscode für eine eingeräumte Nutzungsberechtigung über die Zentralstelle empfangen sowie der empfangene Abwicklungscode in den Automaten eingegeben wird, die gewünschte Nutzung durch den Automaten bereitgestellt und im Automaten der Abwicklungscode und/oder daraus ermittelte Informationen und/oder den Nutzungsvorgang betreffende Informationen gespeichert werden, und diese Informationen nach Beenden des Nutzungsvorgangs aus einem Speicher des Automaten aus-gelesen und an die Zentralstelle übermittelt werden.

2. Verfahren nach Anspruch 1, **dadurch gekennzeichnet, daß** in der Zentrale bei aufeinanderfolgenden Automaten-Nutzungsvorgängen, bei welchen eine gleiche Identifikationsnummer des Nutzers verwendet wird, eine vorgabenabhängige Tariffestlegung durchgeführt wird.

3. Verfahren nach Anspruch 1 oder 2, **dadurch gekennzeichnet, daß** die Identifikationsnummer die Mobilfunkkennung ist.

4. Verfahren nach einem der vorhergehenden Ansprüche, **dadurch gekennzeichnet, daß** die Information über den festgelegten Tarif in den Abwicklungscode eingebracht wird.

5. Verfahren nach einem der vorhergehenden Ansprüche, **dadurch gekennzeichnet, daß** ein Abgleich der im Automaten und der Zentralstelle gespeicherten Informationen zur Durchführung eines Inkassovorgangs durchgeführt wird, wobei bei dem Abgleich der festgelegte Tarif verwendet wird.

6. Verfahren nach einem der vorhergehenden Ansprüche, **dadurch gekennzeichnet, daß** die Tariffestlegung aufgrund der Feststellung der Zugehörigkeit des Nutzers zu einem Sondertarifverbund durchgeführt wird.

7. Verfahren nach einem der vorhergehenden Ansprüche, **dadurch gekennzeichnet, daß** die Tariffestlegung aufgrund zeitlich in einem vorgegebenen Intervall aufeinanderfolgender Nutzungsvorgänge unter Verwendung der gleichen Nutzeridentifikation erfolgt.

8. Verfahren nach einem der vorhergehenden Ansprüche, **dadurch gekennzeichnet, daß** die Tariffestlegung aufgrund der aufeinanderfolgenden Nutzung örtlich nah beieinanderliegender Automaten unter Verwendung der gleichen Identifikationsnummer erfolgt.

9. Verfahren nach einem der vorhergehenden Ansprüche, **dadurch gekennzeichnet, daß** die Tariffestlegung aufgrund eines vorgegebenen sachlichen Zusammenhanges von aufeinanderfolgend genutzten Automaten unter Verwendung der gleichen Identifikationsnummer erfolgt.

## Claims

1. Method of operating automatic machines when carrying out cashless machine transactions using a mobile communications device for communication with a central point, wherein a telephone number of a central point displayed in the region of the automatic machine is dialled, a machine-related and/or transaction-related completion code for authorised use is received via the central point and the received completion code is input into the automatic machine, the desired use is provided by the automatic machine and the completion code and/or data determined therefrom and/or data concerning the transaction are stored in the machine, and after termination of the transaction these data are read out of a memory of the automatic machine and are transmitted to the central point.

2. Method as claimed in Claim 1, **characterised in that** in the event of successive automatic machine transactions in which one and the same identification number for the user is used, a tariff is fixed based on predetermined settings.

3. Method as claimed in Claim 1 or 2, **characterised in that** the identification number is the mobile telephone number.

4. Method as claimed in any one of the preceding claims, **characterised in that** the data concerning the fixed tariff is incorporated into the completion code.

5. Method as claimed in any one of the preceding claims, **characterised in that** a balancing of the data stored in the automatic machine and in the central point is carried out in order to carry out a collection operation, and the fixed tariff is used in the balancing.

6. Method as claimed in any one of the preceding claims, **characterised in that** the fixing of the tariff is carried out on the basis of determining whether the user belongs to a special tariff group.

7. Method as claimed in any one of the preceding claims, **characterised in that** the fixing of the tariff is carried out on the basis of successive transactions conducted in a predetermined time interval using the same user identification.

8. Method as claimed in any one of the preceding claims, **characterised in that** the fixing of the tariff is carried out on the basis of the successive use of automatic machines located geographically near one another using the same identification number.

9. Method as claimed in any one of the preceding claims, **characterised in that** the fixing of the tariff is carried out on the basis of a predetermined factual correlation of successively used automatic machines using the same identification number.

## Revendications

1. Méthode de fonctionnement d'automates lors de l'exécution sans argent liquide d'opérations d'utilisation de ces automates utilisant un terminal de radio-téléphonie mobile pour la communication avec un central, dans laquelle un numéro de téléphone indiqué au niveau de l'automate permet d'appeler un central, un code d'exécution associé à l'automate et/ou associé à l'opération pour un droit d'utilisation accordé est reçu du central, et le code d'exécution reçu est entré dans l'automate, l'utilisation souhaitée est rendue possible par l'automate et le code d'exécution et/ou les informations obtenues à partir de celui-ci et/ou des informations concernant l'opération d'utilisation sont mémorisés dans l'automate, et ces informations sont lues à partir d'une mémoire de l'automate après la fin de l'opération d'utilisation et transmises au central.

2. Méthode selon la revendication 1, **caractérisée en ce qu'**en cas d'opérations successives d'utilisation de l'automate au cours desquelles un même numéro d'identification de l'utilisateur est utilisé, une détermination du tarif en fonction de certains critères est effectuée au niveau du central.

3. Méthode selon la revendication 1 ou 2, **caractérisée en ce que** le numéro d'identification est l'identifiant de radio-téléphonie mobile.

4. Méthode selon l'une quelconque des revendications précédentes, **caractérisée en ce que** l'information sur le tarif fixé est introduite dans le code d'exécution.

5. Méthode selon l'une quelconque des revendications précédentes, **caractérisée en ce que** les informations mémorisées dans l'automate et dans le central sont comparées pour effectuer une opération d'encaissement, le tarif fixé étant utilisé pour la comparaison.

6. Méthode selon l'une quelconque des revendications précédentes, **caractérisée en ce que** la détermination du tarif est effectuée sur la base de la détermination de l'appartenance de l'utilisateur à une catégorie tarifaire spéciale.

7. Méthode selon l'une quelconque des revendications précédentes, **caractérisée en ce que** le tarif est fixé sur la base d'opérations d'utilisation successives dans un intervalle de temps prédéterminé utilisant le même identifiant d'utilisateur.

8. Méthode selon l'une quelconque des revendications précédentes, **caractérisée en ce que** le tarif est fixé sur la base de l'utilisation successive d'automates localement proches avec le même numéro d'identification.

9. Méthode selon l'une quelconque des revendications précédentes, **caractérisée en ce que** le tarif est fixé sur la base d'une relation matérielle entre des automates utilisées successivement avec le même numéro d'identification.
